(19) Europäisches Patentamt
European Patent Office
Office européen des brevets

(11) **EP 2 421 173 A1**

(12) **EUROPEAN PATENT APPLICATION**
published in accordance with Art. 153(4) EPC

(43) Date of publication:
**22.02.2012 Bulletin 2012/08**

(51) Int Cl.:
***H04B 7/005*** *(2006.01)*

(21) Application number: **10764068.2**

(22) Date of filing: **03.03.2010**

(86) International application number:
**PCT/CN2010/070857**

(87) International publication number:
**WO 2010/118655 (21.10.2010 Gazette 2010/42)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **15.04.2009 CN 200910082410**

(71) Applicant: **Huawei Device Co., Ltd.
Longgang District
Shenzhen
Guangdong 518129 (CN)**

(72) Inventors:
• **YANG, Jing
Shenzhen
Guangdong 518129 (CN)**
• **WU, Gengshi
Shenzhen
Guangdong 518129 (CN)**
• **PENG, Nian
Shenzhen
Guangdong 518129 (CN)**
• **ZHANG, Chunling
Shenzhen
Guangdong 518129 (CN)**
• **HUA, Meng
Shenzhen
Guangdong 518129 (CN)**

(74) Representative: **Pfenning, Meinig & Partner GbR
Patent- und Rechtsanwälte
Theresienhöhe 13
80339 München (DE)**

(54) **METHOD, DEVICE AND USER TERMINAL FOR RECEIVING AND PROCESSING DATA**

(57) The present invention discloses a method, an apparatus, and a user terminal for receiving and processing data. The method includes: convoluting a channel estimate value of a receive end with an SCH signal transmitted by a transmit end on an SCH and obtaining an SCH signal in a receive signal of the receive end; evaluating a difference between the receive signal and the SCH signal in the receive signal. The apparatus includes: a receiving module, configured to receive a receive signal from a transmit end; a channel estimation module, configured to use the receive signal to perform channel estimation so as to obtain a channel estimate value; a convolution module, configured to convolute the channel estimate value with an SCH signal transmitted by the transmit end on an SCH and obtain an SCH signal in the receive signal; a difference calculating module, configured to evaluate a difference between the receive signal and the SCH signal obtained by the convolution module. By using the method and apparatus of the present invention, the SCH signal in a receiver may be restored and removed from the receive signal, and interference of the SCH on other channels may be eliminated, thereby improving performance of the receiver.

Convolute a channel estimate value of a receive end with an SCH signal that is transmitted by a transmit end on an SCH to obtain an SCH signal in the receive signal — 101

Evaluate a difference between the receive signal and the SCH signal in the receive signal — 102

FIG. 2

EP 2 421 173 A1

## Description

The present application claims priority of the Chinese patent application No. 200910082410.4, filed with China Patent Office on April 15, 2009, the contents of which are all incorporated herein by reference in its entirety.

### FIELD OF THE INVENTION

The present invention relates to communications technologies, in particular to a method, an apparatus, and a user terminal for receiving and processing data.

### BACKGROUND OF THE INVENTION

In a Wideband Code Division Multiple Access (Wideband Code Division Multiple Access, WCDMA for short) system, among signals transmitted by a transmitter, except a Synchronization Channel (Synchronization Channel, SCH for short), spread spectrum codes of other channels are orthogonal to each other, thereby ensuring that signals between different channels do not interfere with each other. Since the SCH does not have a spread spectrum code, a signal of the SCH interferes with signals of other channels, which affects performance of a communications system.

With evolution of communications technologies, a High Speed Packet Access (High Speed Packet Access, HSPA for short) or HSPA+ system begins to use a new technique such as 64 Quadrature Amplitude Modulation (64 Quadrature Amplitude Modulation, 64QAM for short). A modulation technique for 64QAM requires a receiver to operate in an environment with a high Signal to Noise Ratio. In this situation, interference that the SCH brings to a service channel (a spread spectrum channel) cannot be ignored.

In implementing the present invention, the inventors find that, in prior arts, an SCH remarkably interferes with other channels, which greatly affects the performance of the receiver, in the following two aspects:

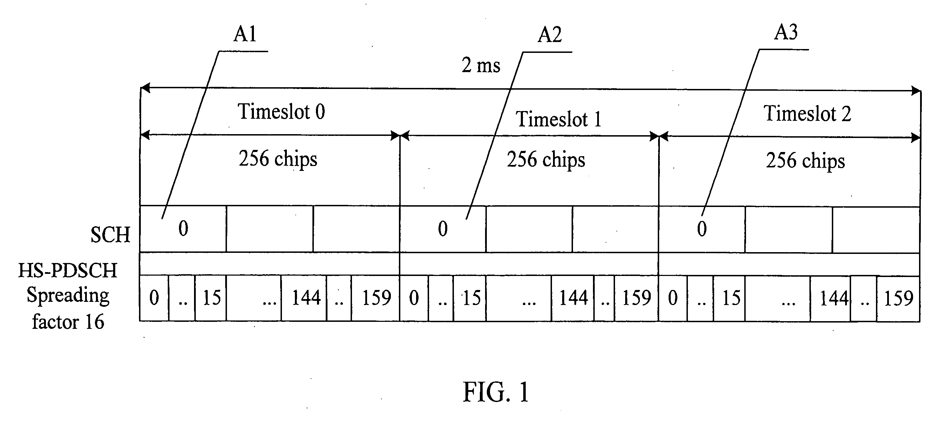

On the one hand, the SCH interference affects the performance of the receiver, which is more remarkable for a 64QAM receiver. FIG. 1 is a schematic structural diagram of an HS-PDSCH (High-Speed Physical Downlink Shared Channel) radio frame. In FIG. 1, a TTI (Transport Time Interval) of an HS-PDSCH is 2 ms. Within 2 ms, there are 3 SCH symbols affecting transmitted symbols on an HS-PDSCH code channel. In FIG. 1, A1, A2, and A3 represents SCH symbols, and there are $3\times(256/16)=48$ HS-PDSCH symbols affected by the SCH symbols on one HS-PDSCH code channel. There are $15\times48=720$ HS-PDSCH symbols affected by the SCH on 15 HS-PDSCH code channels. For a 64QAM receiver, each modulated symbol is composed of 6 bits. Therefore, there are $6\times720=4320$ affected bits on 15 HS-PDSCH code channels. This seriously affects performance of a turbo decoder.

On the other hand, a peak rate of a receiver in a high Signal to Noise Ratio condition is an important performance indicator of the receiver. In the high Signal to Noise Ratio condition, the higher the peak rate is, the better the performance of the receiver is. However, since a current receiver cannot eliminate effects of SCH signals on the signals of other channels, throughput of the receiver within unit time is lowered. This limits the peak rate of the receiver and affects performance of the receiver.

### SUMMARY OF THE INVENTION

The embodiments of the present invention provides a method, an apparatus, and a user terminal for receiving and processing data to eliminate effects of an SCH on other channels and improve performance of a receiver.

A method for receiving and processing data provided by an embodiment of the present invention includes:

convoluting a channel estimate value of a receive end with an SCH signal that is transmitted by a transmit end on an SCH to obtain an SCH signal in a receive signal of the receive end; and
evaluating a difference between the receive signal and the SCH signal in the receive signal.

An apparatus for receiving and processing data provided by an embodiment of the present invention includes:

a receiving module, configured to receive a receive signal from a transmit end;
a channel estimation module, configured to perform channel estimation to obtain a channel estimate value by using the receive signal;
a convolution module, configured to convolute the channel estimate value with an SCH signal that is transmitted by the transmit end on an SCH to obtain an SCH signal in the receive signal; and
a difference calculating module, configured to evaluate a difference between the receive signal and the SCH signal that is obtained by the convolution module.

A user terminal provided by an embodiment of the present invention includes the apparatus for receiving and processing data provided by the preceding embodiment of the present invention.

A user terminal provided by an embodiment of the present invention includes the apparatus for receiving and processing data provided by the preceding embodiment of the present invention.

The method, apparatus, and user terminal provided by the preceding embodiments of the present invention may convolute a channel estimate value of the receive end with an SCH signal that is transmitted by the transmit end on an SCH, restore the SCH signal in the receive signal that is received by the receive end, and perform a subtraction operation on the receive signal and the SCH signal. This removes the SCH signal from the receive signal, eliminates the interference of the SCH on other channels, and improves the performance of the receiver.

**BRIEF DESCRIPTION OF THE DRAWINGS**

FIG. 1 is a schematic structural diagram of an HS-PDSCH radio frame;

FIG. 2 is a flow chart of a method for receiving and processing data according to an embodiment of the present invention;

FIG 3 is a flow chart of a method for receiving and processing data according to another embodiment of the present invention;

FIG. 4 is a flow chart of a method for receiving and processing data according to still another embodiment of the present invention;

FIG. 5 is a schematic structural diagram of an apparatus for receiving and processing data according to an embodiment of the present invention;

FIG. 6 is a schematic structural diagram of an apparatus for receiving and processing data according to another embodiment of the present invention;

FIG. 7 is a schematic structural diagram of an apparatus for receiving and processing data according to still another embodiment of the present invention; and

FIG. 8 is a schematic structural diagram of an apparatus for receiving and processing data according to still another embodiment of the present invention.

**DETAILED DESCRIPTION OF THE EMBODIMENTS**

In the embodiments of the present invention, an SCH signal in a receive signal may be restored and interference of the SCH on other channels except the SCH, including all downlink channels for transmitting service data and transmitting signaling, may be eliminated, thereby improving performance of a receiver. The embodiments of the present invention may be applied to a receiver of any modulation type, especially to a 64QAM receiver operating in a high Signal to Noise Ratio condition.

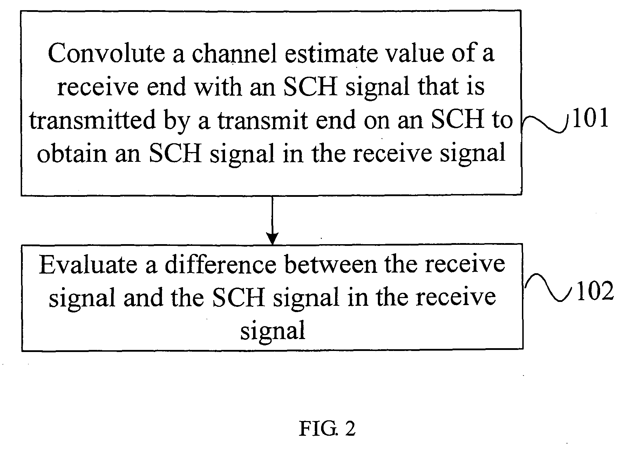

FIG. 2 is a flow chart of a method for receiving and processing data according to an embodiment of the present invention. As shown in FIG. 2, the method for receiving and processing data of this embodiment includes:

Step 101: Convolute a channel estimate value of a receive end with an SCH signal that is transmitted by a transmit end on an SCH to obtain an SCH signal in a signal received by the receive end. For convenience, the signal received by the receive end, that is, the signal that is transmitted by the transmit end and passes through a channel, is referred to as a receive signal.

According to an embodiment of the present invention, the SCH in the preceding step 101 may be all SCHs between the receive end and the transmit end, including a master SCH and a slave SCH. The SCH signal includes a master SCH signal and a slave SCH signal.

By step 101, an SCH signal in the receive signal may be restored.

Step 102: Evaluate a difference between the receive signal and the SCH signal in the receive signal.

By step 102, the SCH signal may be removed from the receive signal to eliminate the interference of the SCH signal on other channels, including all downlink channels for transmitting service data and transmitting signaling, thereby improving the performance of the receiver.

In an application scenario, the channel estimate value in step 101 may be a channel estimate value obtained by performing channel estimation by using a receive signal currently received by the receive end, or a channel estimate value obtained by performing channel estimation by using a receive signal that is received last time by the receive end. Preferably, in step 101, the channel estimate value is obtained by performing channel estimation by using a receive signal currently received by the receive end, and therefore an interfered SCH signal in a current receive signal may be more precisely restored. In this way, the evaluated difference between the receive signal and the SCH signal may be more precise and the interference of the SCH on signals of other channels may be more precisely eliminated.

After eliminating the interference of the SCH signal in the receive signal, performance of the receiver in processing the receive signal may be remarkably improved. For a 64QAM receiver, under the same Signal to Noise Ratio condition, throughput of the 64QAM receiver is increased by 1 - 2 dB compared with the prior art. Under a high Signal to Noise Ratio condition, an effect in improving throughput brought about by the embodiments of the present invention is more notable.

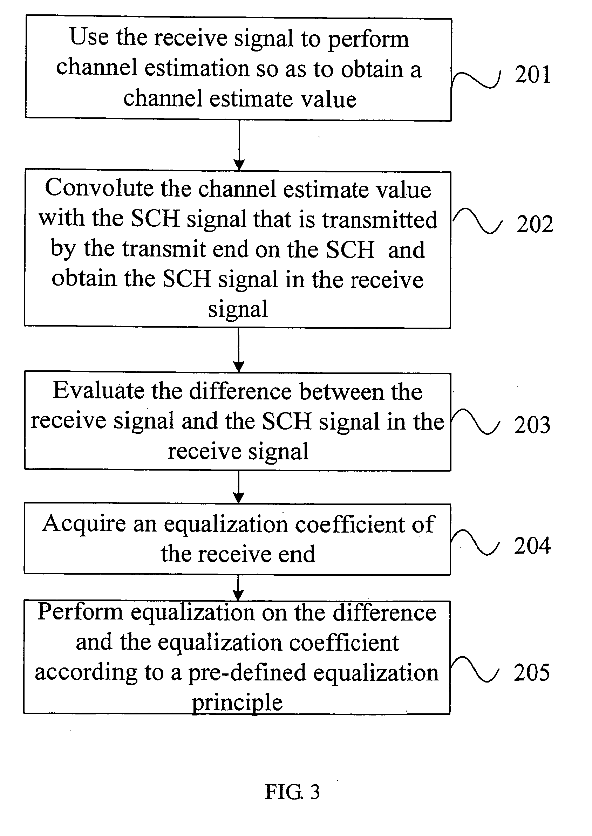

FIG. 3 is a flow chart of a method for receiving and processing data according to another embodiment of the present invention. As shown in FIG. 3, the method for receiving and processing data of this embodiment includes the following steps:

Step 201: Perform channel estimation by using a receive signal that is received by a receive end to obtain a channel estimate value.

In an application scenario, the receive end is specifically embodied as a receiver. The method provided by this embodiment may be implemented in a receiver of a user terminal. The receiver receives, through an antenna of the user terminal, a signal transmitted by a transmit end, and performs channel estimation based on a pilot signal in the signal that is received through the antenna to obtain a channel estimate value.

Step 202: Convolute the channel estimate value obtained through channel estimation with an SCH signal that is transmitted by the transmit end on the SCH to obtain an SCH signal in the receive signal.

Specifically, the SCH signal that is transmitted by the transmit end on the SCH may be stored in advance on the receiver of the user terminal, or may be temporarily generated after the receiver receives the receive signal.

Before equalization is performed, a signal received by the receiver of the user terminal is a multi-path signal. Then, channel estimation is performed on the multi-path signal. An obtained multi-path channel estimate value is convoluted with an SCH signal that is transmitted by the transmit end; the obtained SCH signal corresponds to the SCH signal in the receive signal. Preferably, power adjustment may also be performed on the SCH signal that is obtained through convolution.

By step 202, the SCH signal in the receive signal may be restored.

Step 203: Evaluate a difference between the receive signal and the SCH signal in the receive signal.

By step 203, the SCH signal may be removed from the receive signal, and the interference of the SCH on other channels, including all downlink channels for transmitting service data and transmitting signaling, may be eliminated. This improves the performance of the receiver.

Step 204: Obtain an equalization coefficient of the receive end.

Specifically, the equalization coefficient may be an equalization coefficient that is stored in advance as an equalization coefficient of an equalization module in the receiver that functions as the receive end, or may be an equalization coefficient that is calculated with respect to the receive signal. As an embodiment, a method for calculating the equalization coefficient for the receive signal may be: using the receive signal for performing channel estimation and estimating amplitudes and phases of paths in a decayed channel to obtain the channel estimate value. When a radio signal is transmitted through multiple paths, the channel estimate value is specifically represented as a channel estimate matrix. Specifically, when the equalization coefficient is obtained, the channel estimate value may be obtained through re-estimation, or the channel estimate value obtained in step 201 may be directly used. In addition, energies of Gaussian white noises in the channel are estimated and calculation is performed based on the channel estimate value and the energies, which are obtained through estimation, of the Gaussian white noises to obtain the equalization coefficient.

In another embodiment of the present invention, step 204 may be performed simultaneously with any one of steps 201 - 203, or step 204 may be performed before any one of steps 201 - 203.

Step 205: Equalize, according to a pre-defmed equalization principle by using the equalization coefficient, the difference that is evaluated in step 203.

In this embodiment, channel estimation may be performed before an equalization operation is performed on the receive signal; the obtained channel estimate value may be convoluted with the SCH signal that is transmitted by the transmit end on the SCH; and the interference of the SCH on other channels except the SCH, including all downlink channels for transmitting service data and transmitting signaling, may be eliminated, thereby improving the performance of the receiver.

Further, after step 205 in the preceding embodiment shown in FIG. 3, descrambling and dispreading may also be performed on the signal that is obtained after the equalization in step 205. A signal obtained by descrambling and dispreading corresponds to a transmit signal of the transmit end, that is, corresponds to a transmit signal after the modulation and before the spreading and scrambling of the transmit end.

The following takes an exemplary transmit signal as an example to describe the method for receiving and processing data in the embodiment shown in FIG. 3. Assume that at a certain time instant a dispread signal transmitted in a first channel is a[1, 1], a signal transmitted in a second channel, that is, an SCH, is [b, c]. An overall transmit signal is [a+b, a+c] at the transmit end, and a chip sequence transmitted by a transmitter situated at the transmit end is ..., x(0), x(1), ..., where x(0)=a+b, x(1)=a+c. Assume that [a, a] (that is, a[1, 1]) is a spread spectrum signal that needs to be transmitted, that is, a signal transmitted by the transmitter is a signal carried on an HS-PDSCH (High-Speed Dedicated Physical Control Channel) or a PDSCH (Speed Dedicated Physical Control Channel), and [b, c] is the signal transmitted on the SCH. When the method for receiving and processing data provided by this embodiment of the present invention is not used, the receive end uses the spread spectrum code [1, 1] of the first channel to perform dispreading and a signal of the first channel as obtained will be 2a+b+c. As such, the first channel is interfered with by the SCH signal [b, c]. Taking two channels as an example, after the method for receiving and processing data provided by this embodiment of the present invention is used, assume that the second channel is delayed with respect to the first channel by one chip, a channel impulse response of the first channel is h(0), and a channel impulse response of the second channel is h(1). In this case, the receive signals received in step 201 are: $r(0)=h(0)\cdot x(0)=h(0)\cdot[a+b]$ ; $r(1)=h(0)\cdot x(1)+h(1)\cdot x(0)=h(0)\cdot[a+c]+h(1)\cdot[a+b]$ ; $r(2)=h(1)\cdot x(1)=h(1)\cdot x(1)=h(1)\cdot[a+c]$. By step 201, channel estimate values $h(0)$ and $h(1)$ are obtained. In step 202, the signal that the transmitter transmits on the second channel is the SCH signal [b,c] transmitted on the SCH. By step 202, the SCH signal [b,c] transmitted on the SCH is convoluted with the channel estimate values [$h(0),h(1)$] to obtain SCH signals [$b\cdot h(0),b\cdot h(1)+c\cdot h(0),c\cdot h(1)$] in the receive signals. By step 203, the difference as evaluated is:

$$y = \left[ y(0), y(1), y(2) \right]$$
$$= \left[ r(0), r(1), r(2) \right] - \left[ b \cdot h(0), b \cdot h(1) + c \cdot h(0), c \cdot h(1) \right] = \left[ h(0) \cdot a, h(0) \cdot a + h(1) \cdot a, h(1) \cdot a \right].$$

By step 204, an equalization coefficient w of the receive end is obtained. By step 205, the difference y is equalized by using the equalization coefficient w and the following result is obtained: $\hat{a} = wy$. As can be known from the equalization operation, a signal obtained after the equalization is irrelevant to an SCH symbol. Therefore, in this embodiment of the present invention, the interference of the SCH signal on signals of other channels, including signals of all downlink channels for transmitting service data and transmitting signaling, is eliminated, thereby improving the performance of the receiver.

As can be seen from the method provided by this embodiment of the present invention, after the interference of the SCH signal in the receive signal is eliminated, the performance of the receiver will be remarkably improved. For a 64QAM receiver, the effect is particularly remarkable. The throughput of the 64QAM receiver is increased by about 1 - 2 dB under the same Signal to Noise Ratio condition, compared with the prior art. Under a high Signal to Noise Ratio condition, an effect in increasing throughput brought about by the embodiments of the present invention is more notable.

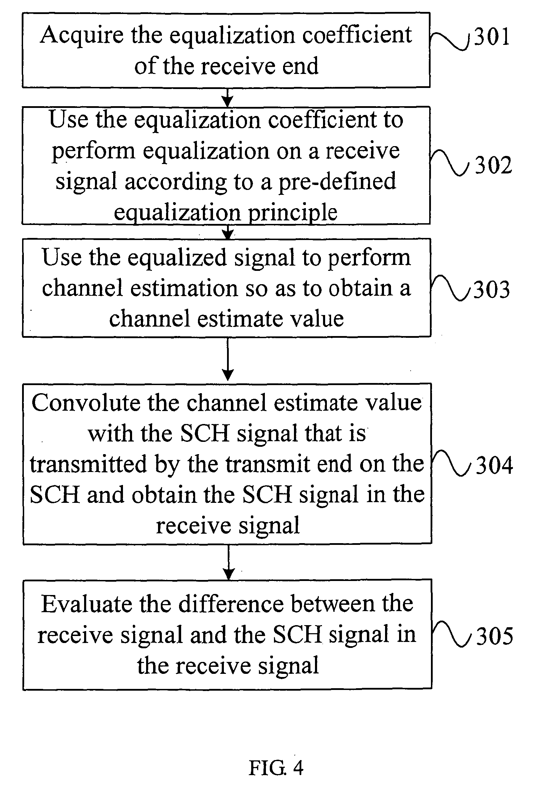

FIG. 4 is a flow chart of a method for receiving and processing data according to still another embodiment of the present invention. The embodiment may be implemented through a user terminal. As shown in FIG. 4, the method for receiving and processing data of this embodiment includes the following steps:

Step 301: Obtain an equalization coefficient of a receive end.

Step 302: Equalize, according to a pre-defined equalization principle by using the equalization coefficient, a signal received by the receive end (that is, a receive signal).

Step 303: Perform channel estimation by using a signal after equalization and obtain a channel estimate value.

The signal after equalization is a single-path signal. By performing channel estimation on the signal after equalization, a channel estimate value is obtained.

Step 304: Convolute the channel estimate value obtained through channel estimation with an SCH signal that is transmitted by the transmit end on an SCH to obtain an SCH signal in the receive signal.

Specifically, the SCH signal that is transmitted by the transmit end on the SCH may be stored in advance on a receiver of the user terminal, or may be temporarily generated by the receiver after the receive signal is received. The channel estimate value is multiplied by the SCH signal that is transmitted by the transmit end on the SCH, and the obtained SCH signal corresponds to an interfered SCH signal in the receive signal. By step 304, the interfered SCH signal in the receive signal may be restored.

Step 305: Evaluate the difference between the receive signal and the SCH signal in the receive signal.

By step 305, the SCH signal may be removed from the receive signal. This eliminates interference of the SCH on other channels, including all downlink channels for transmitting service data and transmitting signaling, thereby improving the performance of the receiver on the receive end.

In this embodiment, channel estimation may be performed after the receive signal used to perform equalization; the obtained channel estimate value may be convoluted with the SCH signal that is transmitted by the transmit end on the SCH; and the interference of the SCH on other channels, including all downlink channels for transmitting service data and transmitting signaling, may be eliminated, thereby improving the performance of the receiver.

In addition, after step 305 of the preceding embodiment shown in FIG. 4, the difference obtained in step 305 may be descrambled and dispread to obtain a transmit signal corresponding to the receive signal.

The following still takes that at a certain time instant the dispread signal transmitted in the first channel is a[1, 1] and the signal transmitted in the SCH is [b, c] as an example, to describe the method for receiving and processing data in accordance with the embodiment of the present invention shown in FIG. 4. In step 301, channel estimation is first performed to obtain channel estimate values $h(0)$ and $h(1)$, and then an equalization coefficient $w$ is obtained according to the channel estimate values $h(0)$ and $h(1)$. In step 302, the receive signal $[x(0),x(1)]$ is equalized by using the equalization coefficient $w$ : $[\hat{x}(0),\hat{x}(1)]=wy$, assuming that $[\hat{x}(0),\hat{x}(1)]=[kx(0),kx(1)]$. By step 303, the equalized signal is used to perform channel estimation so as to obtain a channel estimate value $k$. In step 304, the SCH signal transmitted by the transmitter on the second channel is a signal *[b,c]* transmitted on the SCH. By convoluting the SCH signal [b, c] transmitted on the SCH with the equalized channel estimate value $k$, an SCH signal [$kb,kc$] in the receive signal is obtained. By step 305, the difference as evaluated is: $[\hat{x}(0),\hat{x}(1)]-[kb,kc]=[k(a+b),k(a+c)]-[kb,kc]=k[a,a]$ where $[a,a]$ is a signal transmitted on a service channel. As can be seen from the obtained difference, the signal obtained after the equalization only relates to the first channel and is irrelevant to an SCH symbol. Therefore, in this embodiment of the present invention, the interference of the SCH on other channels, including all downlink channels for transmitting service data and transmitting signaling, is eliminated, thereby improving the performance of the receiver.

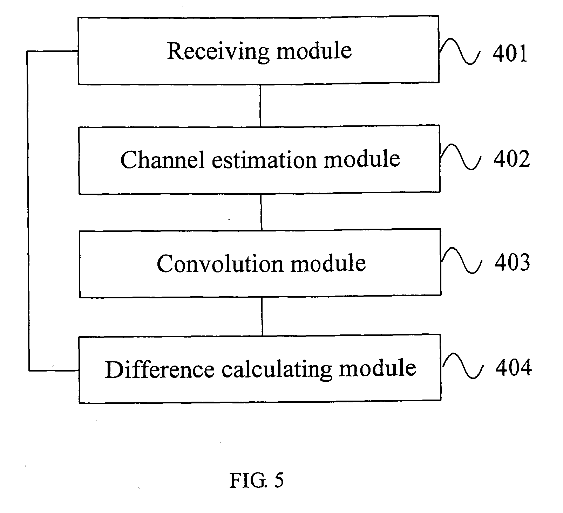

FIG. 5 is a schematic structural diagram of an apparatus for receiving and processing data according to an embodiment of the present invention. The apparatus for receiving and processing data of this embodiment may be used to implement the process for receiving and processing data in the embodiment shown in FIG. 2. As shown in FIG. 5, the apparatus for receiving and processing data of this embodiment includes a receiving module 401, a channel estimation module 402, a convolution module 403, and a difference calculating module 404.

The receiving module 401 is configured to receive a signal from a transmit end, where the signal is also called a receive signal. The channel estimation module 402 is configured to perform channel estimation by using the receive signal that is received by the receiving module 401 to obtain a channel estimate value. The convolution module 403 is configured to convolute the channel estimate value obtained by the channel estimation module 402 with an SCH signal that is transmitted by the transmit end on an SCH to obtain an SCH signal in the receive signal. According to an embodiment of the present invention, the SCH may be all SCHs between a receive end and the transmit end, including a master SCH and a slave SCH. The difference calculating module 404 is configured to evaluate a difference between the receive signal received by the receiving module 401 and the SCH signal obtained by the convolution module 403. After the difference between the receive signal and the SCH signal that is obtained by convolution is evaluated, the SCH signal is removed from the receive signal, thereby eliminating interference of the SCH on other channels and improving performance of a receiver.

In the embodiment shown in FIG. 5, the SCH signal that is transmitted by a transmitter on the SCH may be stored in advance in the receive end, or may be temporarily generated by the receive end after the signal transmitted by the transmit end is received.

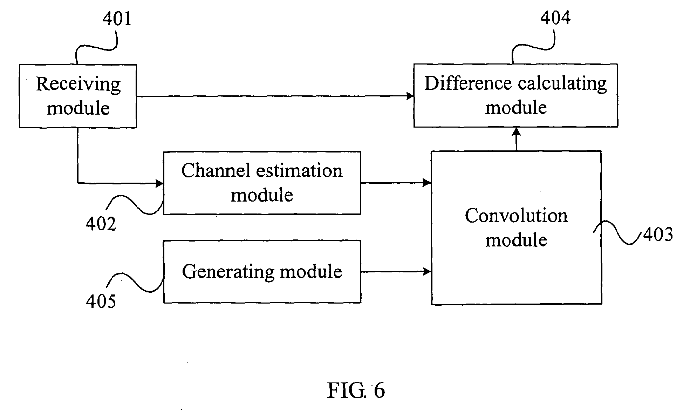

FIG. 6 is a schematic structural diagram of an apparatus for receiving and processing data according to another embodiment of the present invention. Compared with the embodiment shown in FIG. 5, the apparatus for receiving and processing data of this embodiment further includes a generating module 405, configured to generate the SCH signal that is transmitted by the transmit end on the SCH. Accordingly, the convolution module 403 is configured to convolute the channel estimate value obtained by the channel estimation module 402 with the SCH signal generated by the generating module 405 to obtain the SCH signal in the receive signal. Specifically, the generating module 405 may store in advance the SCH signal that is transmitted by the transmit end on the SCH and output the SCH signal when the convolution module 403 needs to perform convolution. Or, the SCH signal that is transmitted by the transmit end on SCH may be generated and output to the convolution module 403 when the convolution module 403 needs to perform convolution, according to the same generating condition as that of the transmitter.

The apparatus provided by this embodiment of the present invention may eliminate the interference of the SCH signal in the receive signal and remarkably improve the performance of the receiver. For a 64QAM receiver, the effect is particularly remarkable. Throughput of the 64QAM receiver, under the same Signal to Noise Ratio condition, is increased by about 1 - 2 dB, compared with the prior art. Under a high Signal to Noise Ratio condition, an effect in increasing throughput brought about by the embodiment of the present invention is more notable.

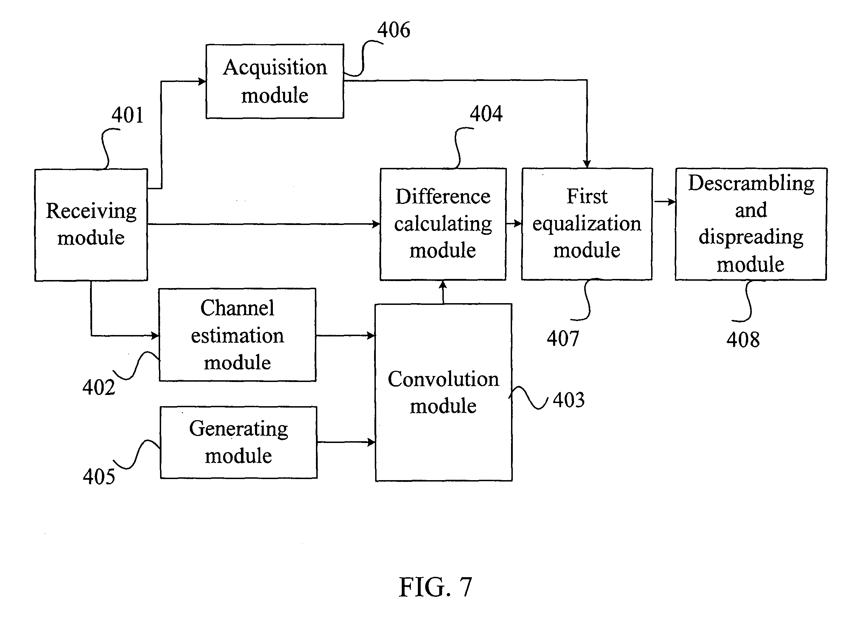

FIG. 7 is a schematic structural diagram of an apparatus for receiving and processing data according to still another embodiment of the present invention. As shown in FIG. 7, compared with the embodiment shown in FIG. 6, the apparatus for receiving and processing data of this embodiment further includes an acquisition module 406 and a first equalization module 407. The acquisition module 406 is configured to acquire an equalization coefficient of the apparatus for receiving and processing data that functions as a receive end. In an application scenario, the acquisition module 406 may acquire a previously stored equalization coefficient of the first equalization module 407, or may calculate an equalization coefficient with respect to the receive signal. The first equalization module 407 is configured to equalize, according to a pre-defined equalization principle by using the equalization coefficient acquired by the acquisition module 406, the difference evaluated by the difference calculating module 404.

Further, as shown in FIG. 7, the apparatus for receiving and processing data of the preceding embodiment may further include a descrambling and dispreading module 408, configured to descramble and dispread the signal that is equalized by the first equalization module 407 to obtain a signal that is transmitted by the transmit end and corresponds to the receive signal, that is, a transmit signal.

The apparatus provided by this embodiment of the present invention may eliminate the interference of the SCH signal in the receive signal and remarkably improve performance of a receiver. For a 64QAM receiver, the effect is particularly remarkable. Throughput of the 64QAM receiver, under the same Signal to Noise Ratio condition, is increased by about 1 - 2 dB compared with the prior art. Under a high Signal to Noise Ratio condition, an effect in increasing throughput brought about by the embodiment of the present invention is more notable.

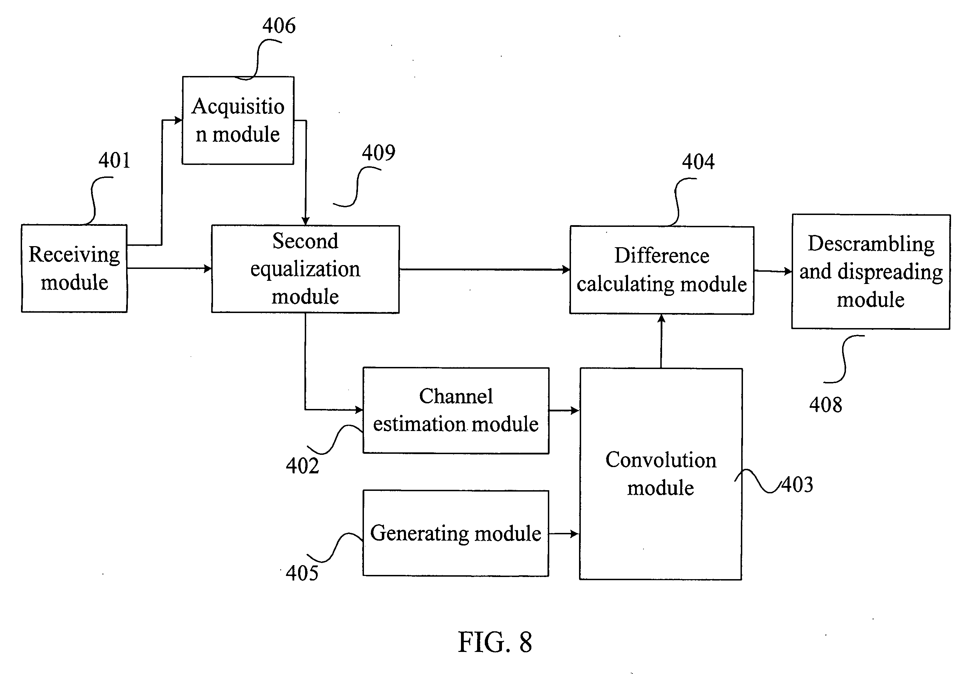

FIG. 8 is a schematic structural diagram of an apparatus for receiving and processing data according to still another embodiment of the present invention. As shown in FIG. 8, compared with the embodiment shown in FIG. 6, the apparatus for receiving and processing data of this embodiment further includes an acquisition module 406 and a second equalization module 409. The acquisition module 406 is configured to acquire the equalization coefficient of the apparatus for receiving and processing data that functions as the receive end. Specifically, the acquisition module 406 may acquire a previously stored equalization coefficient of the second equalization module 409, or may calculate an equalization coefficient with respect to the receive signal. The second equalization module 409 is configured to perform equalization, according to a pre-defmed equalization principle by using the equalization coefficient acquired by the acquisition module 406, on the receive signal received by the receiving module 401. Accordingly, the channel estimation module 402 specifically uses the signal equalized by the second equalization module 409 to perform channel estimation so as to obtain a channel estimate value. The difference calculating module 404 evaluates the difference between the signal equalized by the second equalization module 409 and the SCH signal obtained by the convolution module 403. Further, as shown in FIG. 8, the apparatus for receiving and processing data of the preceding embodiment may further include a descrambling and dispreading module 408, configured to descramble and dispread the difference that is evaluated by the difference calculating module 404 to obtain a signal that is transmitted by the transmit end and corresponds to the receive signal, that is, a transmit signal.

The apparatus for receiving and processing data provided by any one of the embodiments of FIG. 5 to FIG. 8 in the present invention may be deployed on the receive end and function as a receiver for implementing a function of receiving and processing a signal that is transmitted by a transmitter situated on the transmit end.

In addition, an embodiment of the present invention further provides a user terminal. The user terminal may include the apparatus for receiving and processing data provided by any one of the embodiments of FIG. 5 to FIG. 8 in the present invention to process a signal received by the user terminal and eliminate interference of an SCH signal.

In an application scenario, an antenna of the user terminal receives a signal from a transmit end; the apparatus for receiving and processing data receives the signal that is received by the antenna, extracts a pilot signal from the signal that is received by the antenna, uses the pilot signal to perform channel estimation so as to obtain a channel estimate value, uses the channel estimate value and an SCH signal that is transmitted by the transmit end to perform convolution, restores an SCH signal in the receive signal, and then subtracts the SCH signal that is obtained after the convolution from the receive signal so as to eliminate the interference of a signal of an SCH on signals of other channels. Further, the apparatus for receiving and processing data may also perform equalization on the receive signal free of the interference of the SCH signal. Further, the apparatus for receiving and processing data may also descramble and dispread an equalized signal.

In another application scenario, the apparatus for receiving and processing data may perform an equalization operation on the signal received by the antenna, perform channel estimation on the equalized signal to obtain a channel estimate value, convolute the channel estimate value with the SCH signal transmitted by the transmit end, restore the SCH signal in the receive signal, and then subtract the SCH signal that is obtained after the convolution from the receive signal so as to eliminate the interference of the signal of the SCH on the signals of other channels. Further, the apparatus for receiving and processing data may descramble and dispread the receive signal free of the interference of the SCH signal. The apparatus provided by this embodiment of the present invention may eliminate the interference of the SCH signal in the receive signal and remarkably improve the performance of the receiver. For a 64QAM receiver, the effect is more remarkable. Throughput of the 64QAM receiver, under the same Signal to Noise Ratio condition, is increased by about 1 - 2 dB compared with the prior art. Under a high Signal to Noise Ratio condition, an effect in increasing throughput brought about by the embodiment of the present invention is more notable.

In addition, an embodiment of the present invention further provides a communications system including a transmit end and a receive end, where the receive end is configured to receive a signal transmitted by the transmit end, use a receive signal that is received to perform channel estimation so as to obtain a channel estimate value, convolute the channel estimate value with an SCH signal that is transmitted by a transmit end on an SCH to obtain a signal received by the receive end, that is, an SCH signal in the receive signal, and evaluate a difference between the receive signal and the SCH signal. In this way, interference of the SCH on other channels, including all downlink channels for transmitting service data and transmitting signaling, is eliminated, and performance of a receiver is improved.

Specifically, the transmit end in the communications system may be deployed in a base station, and the receive end may be deployed in a user terminal. The receive end in the communications system of the present invention may be implemented through the apparatus for receiving and processing data provided by any one of the embodiments of FIG. 5 to FIG. 8 of the present invention.

A person skilled in the art may understand that, all or part of the steps in the preceding method embodiments may be completed by hardware related to a program instruction. The aforesaid program may be stored in a computer readable storage medium. When the program is executed, steps of the preceding method embodiments are performed. The aforesaid storage medium includes a medium capable of storing a program code such as a Read Only Memory (ROM), a Random Access Memory (RAM), a magnetic disk or a Compact Disk-Read Only Memory (CD-ROM).

The embodiments of the present invention may convolute the channel estimate value of the receive signal with the SCH signal that is transmitted by the transmitter on the SCH, restore the SCH signal in the receiver, perform a subtraction operation on the receive signal and the SCH signal, remove the SCH signal from the receive signal, and eliminate the interference of the SCH on other channels, thereby improving the performance of the receiver in processing the receive signal. In the embodiments of the present invention, after the interference of the SCH signal is eliminated, the throughput of a 64QAM receiver, under the same Signal to Noise Ratio condition, is increased by about 1 - 2 dB compared with the prior art. Under a high Signal to Noise Ratio condition, effects in increasing throughput brought about by the embodiments of the present invention are more notable.

Finally, it should be noted that, the preceding embodiments are merely used for explaining the technical solutions of the present invention, and not for limiting the present invention. Though the present invention is described in detail with reference to the preceding embodiments, a person skilled in the art should understand that, the technical solutions of the present invention may be modified or equivalently replaced without departing the spirit and scope of the technical solutions of the present invention.

**Claims**

1. A method for receiving and processing data, comprising:

   convoluting a channel estimate value of a receive end with a Synchronization Channel (SCH) signal that is transmitted by a transmit end on a synchronization channel to obtain an SCH signal in a receive signal of the receive end; and
   evaluating a difference between the receive signal and the SCH signal in the receive signal.

2. The method according to claim 1, wherein before convoluting the channel estimate value of the receive end with the SCH signal that is transmitted by the transmit end on the synchronization channel, the method further comprises: using the receive signal to perform channel estimation so as to obtain the channel estimate value; and
   the method further comprises: acquiring an equalization coefficient of the receive end; performing equalization on the difference according to a pre-defmed equalization principle by using the equalization coefficient.

3. The method according to claim 2, further comprising:

   descrambling and dispreading a signal that is obtained after the difference is equalized by using the equalization coefficient to obtain a transmit signal of the transmit end corresponding to the receive signal.

4. The method according to claim 1, wherein before convoluting the channel estimate value of the receive end with the SCH signal that is transmitted by the transmit end on the synchronization channel, the method further comprises: acquiring an equalization coefficient of the receive end;
   performing equalization on the receive signal according to a pre-defmed equalization principle by using the equalization coefficient; and
   performing channel estimation by using the equalized signal to obtain a channel estimate value.

5. The method according to claim 4, further comprising:

   descrambling and dispreading the difference to obtain a transmit signal of the transmit end corresponding to the receive signal.

6. An apparatus for receiving and processing data, comprising:

   a receiving module, configured to receive a receive signal from a transmit end;
   a channel estimation module, configured to perform channel estimation by using the receive signal to obtain a channel estimate value;
   a convolution module, configured to convolute the channel estimate value with an SCH signal that is transmitted by the transmit end on an SCH to obtain an SCH signal in the receive signal; and

a difference calculating module, configured to evaluate a difference between the receive signal and the SCH signal that is obtained by the convolution module.

7. The apparatus according to claim 6, further comprising:

a generating module, configured to generate the SCH signal that is transmitted by the transmit end on the SCH.

8. The apparatus according to claim 7, further comprising:

an acquisition module, configured to acquire an equalization coefficient of the apparatus for receiving and processing data; and
a first equalization module, configured to perform equalization on the difference according to a pre-defmed equalization principle by using the equalization coefficient.

9. The apparatus according to claim 8, further comprising:

a descrambling and dispreading module, configured to descramble and dispread a signal that is equalized by the first equalization module.

10. The apparatus according to claim 7, further comprising:

an acquisition module, configured to acquire an equalization coefficient of the apparatus for receiving and processing data; and
a second equalization module, configured to perform equalization on the receive signal according to a pre-defmed equalization principle by using the equalization coefficient;
the channel estimation module being configured to use the signal that is equalized by the second equalization module to perform channel estimation so as to obtain the channel estimate value;
the difference calculating module being configured to evaluate a difference between the signal that is equalized by the second equalization module and the SCH signal that is obtained by the convolution module.

11. The apparatus according to claim 10, further comprising:

a descrambling and dispreading module, configured to descramble and dispread the difference that is evaluated by the difference calculating module.

12. A user terminal, comprising the apparatus for receiving and processing data described in any one of claims 6 - 11.

A1  A2  A3

2 ms

Timeslot 0 — 256 chips

Timeslot 1 — 256 chips

Timeslot 2 — 256 chips

SCH: 0 ... 0 ... 0

HS-PDSCH Spreading factor 16:
0 .. 15 ... 144 .. 159 | 0 .. 15 ... 144 .. 159 | 0 .. 15 ... 144 .. 159

FIG. 1

Convolute a channel estimate value of a receive end with an SCH signal that is transmitted by a transmit end on an SCH to obtain an SCH signal in the receive signal ~⌐101

Evaluate a difference between the receive signal and the SCH signal in the receive signal ⌐~102

FIG. 2

| Use the receive signal to perform channel estimation so as to obtain a channel estimate value | 201 |

↓

| Convolute the channel estimate value with the SCH signal that is transmitted by the transmit end on the SCH and obtain the SCH signal in the receive signal | 202 |

↓

| Evaluate the difference between the receive signal and the SCH signal in the receive signal | 203 |

↓

| Acquire an equalization coefficient of the receive end | 204 |

↓

| Perform equalization on the difference and the equalization coefficient according to a pre-defined equalization principle | 205 |

FIG. 3

| Acquire the equalization coefficient of the receive end | 301 |

| Use the equalization coefficient to perform equalization on a receive signal according to a pre-defined equalization principle | 302 |

| Use the equalized signal to perform channel estimation so as to obtain a channel estimate value | 303 |

| Convolute the channel estimate value with the SCH signal that is transmitted by the transmit end on the SCH and obtain the SCH signal in the receive signal | 304 |

| Evaluate the difference between the receive signal and the SCH signal in the receive signal | 305 |

FIG. 4

| Receiving module | 401 |

| Channel estimation module | 402 |

| Convolution module | 403 |

| Difference calculating module | 404 |

FIG. 5

401

Receiving
module

404

Difference calculating
module

Channel estimation
module

402

Generating module

405

Convolution
module

403

FIG. 6

FIG. 7

FIG. 8

# INTERNATIONAL SEARCH REPORT

International application No.

PCT/CN2010/070857

**A. CLASSIFICATION OF SUBJECT MATTER**

H04B7/005(2006.01)i

According to International Patent Classification (IPC) or to both national classification and IPC

**B. FIELDS SEARCHED**

Minimum documentation searched (classification system followed by classification symbols)

IPC:H04B;H04L;H04W

Documentation searched other than minimum documentation to the extent that such documents are included in the fields searched

Electronic data base consulted during the international search (name of data base and, where practicable, search terms used)

CPRS;CNKI;EPODOC;WPI: data, signal, sequence, synchroniz+, SCH, channel, estimat+, response, impulse, convolut+, convolv+, differenc+, eliminat+, minus, subtract+

**C. DOCUMENTS CONSIDERED TO BE RELEVANT**

| Category* | Citation of document, with indication, where appropriate, of the relevant passages | Relevant to claim No. |
|---|---|---|
| PX | CN101540744A(SHEN ZHEN HUAWEI COMMUNICATION TECHNOLOGIES CO.) 23 Sep. 2009 (23.09.2009) the whole document | 1-12 |
| X | CN1893409A(UNIV TSINGHUA) 10 Jan. 2007 (10.01.2007) description page 6 line 19 to the last line of page 7,abstract | 1-12 |
| A | WO2008068669A1(KONINKL PHILIPS ELECTRONICS N.V.) 12 Jun. 2008 (12.06.2008) the whole document | 1-12 |
| A | CN101119350A (HUAWEI TECH CO., LTD.)06 Feb. 2008(06.02.2008)\ the whole document | 1-12 |

☐ Further documents are listed in the continuation of Box C.  ☒ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| 17 May 2010 (17.05.2010) | **03 Jun. 2010 (03.06.2010)** |

| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer **JIA,Jie** Telephone No. (86-10)62411405 |

Form PCT/ISA /210 (second sheet) (July 2009)

## INTERNATIONAL SEARCH REPORT
Information on patent family members

| | International application No. |
|---|---|
| | PCT/CN2010/070857 |

| Patent Documents referred in the Report | Publication Date | Patent Family | Publication Date |
|---|---|---|---|
| CN101540744A | 23.09.2009 | NONE | |
| CN1893409A | 10.01.2007 | NONE | |
| WO2008068669A1 | 12.06.2008 | TW200833041A | 01.08.2008 |
| | | EP2090047A1 | 19.08.2009 |
| | | KR20090083911A | 04.08.2009 |
| | | CN101573929A | 04.11.2009 |
| | | US2010067629A1 | 18.03.2010 |
| CN101119350A | 06.02.2008 | NONE | |

Form PCT/ISA /210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200910082410